(19) Europäisches Patentamt
European Patent Office
Office européen des brevets

(11) **EP 0 911 141 A2**

(12) **EUROPÄISCHE PATENTANMELDUNG**

(43) Veröffentlichungstag:
28.04.1999 Patentblatt 1999/17

(51) Int. Cl.⁶: **B29C 65/14**, B29C 65/16

(21) Anmeldenummer: 98119922.7

(22) Anmeldetag: 21.10.1998

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 21.10.1997 DE 19746402

(71) Anmelder:
Fresenius Medical Care Deutschland GmbH
61350 Bad Homburg v.d.H. (DE)

(72) Erfinder:
• Bohnacker, Matthias
66606 St. Wendel (DE)

• Kramp, Ulrich
66901 Schöneberg-Kübelberg (DE)
• Pott, Harald Dr.
66557 Illingen (DE)
• Heilmann, Klaus
66606 St. Wendel (DE)
• Nicola, Thomas
57350 Spicheren (FR)

(74) Vertreter:
Gossel, Hans K., Dipl.-Ing. et al
Lorenz-Seidler-Gossel
Widenmayerstrasse 23
80538 München (DE)

(54) **Verfahren und Vorrichtung zum Verschweissen von Kunststoffolien, vorzugsweise von Polyolefin-Folien**

(57) Zum Verschweißen von Kunststoffolien, vorzugsweise von Polyolefin-Folien (12,13), wird den Folien in ihren zusammengedrückten, zu verschweißenden Bereich die Schweißwärme zugeführt. Um feste Schweißnähte zu schaffen, bei denen das Material bei dem Schweißvorgang nicht aus dem Bereich der Schweißnähte verdrängt wird, und um zu verhindern, daß das Kunststoffmaterial beim Öffnen der Schweißvorrichtung an den Schweißbacken hängenbleibt, wird der Bereich, der sich an den plastifizierten, die Schweißverbindung bildenden Bereich anschließt, während des Zuführens der Schweißwärme gleichzeitig gekühlt.

**Beschreibung**

Die Erfindung betrifft ein Verfahren zum Verschweißen von Kunststoffolien, vorzugsweise von Polyolefin-Folien, bei dem den Folien in ihrem zusammengedrückten, zu verschweißenden Bereich die Schweißwärme zugeführt wird, und eine Vorrichtung zur Durchführung dieses Verfahrens.

Kunststoffolien werden üblicherweise beispielsweise zu Beuteln dadurch verschweißt, daß dem Schweißnahtbereich von relativ zueinander aufeinander zu und voneinander weg bewegbaren Schweißbacken die Schweißwärme zugeführt wird. Bei diesem Schweißvorgang schmelzen die miteinander zu verschweißenden Folien im Schweißnahtbereich auf, wobei plastifiziertes Folienmaterial von den Schweißbacken verdrängt wird, so daß es seitlich neben den Schweißbacken heraustritt. Dieses Verdrängen des plastifizierten Folienmaterials während des Schweißvorgangs aus dem Schweißnahtbereich hat nicht nur die unerwünschte Folge, daß der Schweißnahtbereich dünner, beispielsweise um die Hälfte dünner ist als die Summe der Einzeldicken der zu verschweißenden Folienschichten, sondern daß sich das aus dem Schweißnahtbereich verdrängte Material zu einer Wulst im Übergangsbereich zwischen den Schweißnähten und den Beutelwänden anhäuft. Diese Wulst kann eine Sprödigkeit und Kerbschlaganfälligkeit des verdrängten Kunststoffmaterials in dem kritischen Übergangsbereich zwischen der Schweißnaht und den Beutelwänden verursachen.

Häufig neigt das Material der zu verschweißenden Kunststoffolien auch zu einem Anhaften an den Schweißbacken, so daß es beim Öffnen des Schweißwerkzeugs zu einer Zerstörung der Schweißnaht kommen kann.

Besonders anfällig beim Verschweißen sind reine Polyolefin-Folien. Polyolefin-Folien eignen sich besonders gut für eine nachgeschaltete Wärmebehandlung und/oder Sterilisation, so daß aus verschweißten Polyolefin-Folien hergestellte Beutel insbesondere zur Verpackung von medizinischen Lösungen und Lebensmitteln verwendet werden. An die Schweißnähte von aus Polyolefin-Folien bestehenden Beuteln sind daher besondere Anforderungen hinsichtlich ihrer Fallfestigkeit und Reiß- bzw. Peelfestigkeit zu stellen.

Aufgabe der Erfindung ist es daher, ein Verfahren zum Verschweißen von Kunststoffolien und insbesondere von Polyolefin-Folien vorzuschlagen, das die Herstellung fester Schweißnähte ermöglicht, bei denen das Material bei dem Schweißvorgang nicht aus dem Bereich der Schweißnähte verdrängt wird und bei denen das Kunststoffmaterial beim Öffnen der Schweißvorrichtung nicht an den Schweißbacken hängen bleibt.

Erfindungsgemäß wird diese Aufgabe bei einem Verfahren der eingangs angegebenen Art dadurch gelöst, daß der Bereich, der sich an den plastifizierten, die Schweißverbindung bildenden Bereich anschließt, während des Zuführens der Schweißwärme gleichzeitig gekühlt wird.

Nach dem erfindungsgemäßen Verfahren befindet sich der zum Zwecke des Verschweißens erwärmte und dadurch plastifizierte Bereich zwischen zwei gekühlten Bereichen.

Nach dem erfindungsgemäßen Verfahren lassen sich insbesondere Polyolefin-Folien gut unter Bildung von Schweißnähten verschweißen, deren Dicke im wesentlichen der Summe der Einzeldicken der verschweißten Folien entspricht.

Das erfindungsgemäße Verfahren ermöglicht das Bilden fester und widerstandsfähiger Schweißnähte dadurch, daß der eigentliche Schweißbereich beidseitig längs der Schweißnaht gekühlte Abgrenzzonen besitzt. Dadurch wird die zuvor beschriebene Wulstbildung vermieden. Durch schnelle Abkühlung des die Schweißnaht bildenden schmelzflüssigen Kunststoffmaterials wird zusätzlich die Entstehung von Kristallinität und damit Sprödigkeit vermieden, die eine Folge langsamen Abkühlens aus der plastischen Phase ist. Durch das schnelle Abkühlen des Schweißnahtbereichs wird weiterhin verhindert, daß dieser an den Außenflächen der Schweißbacken kleben bleibt.

Aus EP 0 362 904 A2 ist eine Vorrichtung zum Anschweißen scheibenförmiger thermoplastischer Kunststoffteile an eine thermoplastische Folie bekannt, bei der die Schweißwärme durch einen mit einer Widerlagerplatte zusammenwirkende ringförmige Schweißbacke, die auf die gegen die Widerlagerplatte abgestützten zu verschweißenden Teile angedrückt und ein elektrisches Widerstandsheizelement bildet, verschweißt. Oberhalb der ringförmigen Schweißbacke sind zwei vertikale Kanäle vorgesehen, durch die auf einander gegenüberliegende Bereiche des Schweißkopfes gekühlte Luft geblasen wird. Diese gekühlte Luft dient aber nicht dazu, die an die plastifizierte Schweißnaht angrenzenden Bereiche zu kühlen.

Nach dem erfindungsgemäßen Verfahren werden die Bereiche neben der Schweißnaht bzw. der den Schweißpunkt umgebende Bereich gekühlt.

Sobald die Zuführung der Schweißwärme unterbrochen wird, fließt die dem Schweißnahtbereich zugeführte Wärme in die gekühlten Bereiche, so daß sich die gewünschte schnelle und unmittelbare Abkühlung nach dem Ausführen der Schweißnaht ergibt.

Nach einer bevorzugten Ausführungsform der Erfindung ist vorgesehen, daß die Schweißnaht bzw. der Schweißpunkt und die unmittelbar an diese angrenzenden Bereiche gleichzeitig mit gleichem Druck während des Schweißens bzw. Kühlens beaufschlagt werden.

Eine Vorrichtung zur Durchführung des erfindungsgemäßen Verfahrens mit zwei relativ aufeinander zu und voneinander weg bewegbaren Schweißbacken zeichnet sich erfindungsgemäß dadurch aus, daß der mittlere Bereich mindestens einer Schweißbacke durch eine Heizeinrichtung unter Druckbeaufschlagung erwärmbar ist und die angrenzenden Bereiche der Schweißbacke durch eine Kühleinrichtung gekühlt sind.

Zweckmäßigerweise besteht die Heizeinrichtung aus einer Strahlungsquelle. Mit einer Strahlungsquelle läßt sich die Zuführung der Wärmemenge während der Ausführung der Schweißnaht gut steuern.

Zweckmäßigerweise ist die Strahlungsquelle Laserlicht. Die Strahlungsquelle kann aus einer Laserlichtdiode bestehen. Als Strahlungsquelle kommt auch Infrarot-Licht in Betracht.

Schließlich kann die Heizeinrichtung auch aus einer elektrischen Widerstandsheizeinrichtung bestehen.

Um dem beheizten Bereich nur kurzfristig während der Dauer des Schweißvorgangs Wärme zuführen zu können, besteht diese zweckmäßigerweise im Bereich der Schweißfläche aus einer dünnen Schicht, die nur wenig Wärme speichert. Die dünne Schweißfläche kann aus einem Steg bestehen, der selbst das elektrische Widerstandsheizelement bildet.

Um den Schweißnahtbereich nach der Zuführung der Schweißwärme schnell kühlen zu können, ist in weiterer Ausgestaltung der Erfindung vorgesehen, daß mindestens eine Schweißbacke mit einer Kühlung, bevorzugt Kühlmittelbohrungen versehen ist.

Die Schweißbacken können aus keramischen oder metallischen Materialien mit einer Wärmeleitfähigkeit von $\lambda < 100$ W/m $\cdot$ K und einem Längenausdehnungskoeffinzienten $\alpha < 18,5 \times 10^{-6}$ 1/K bestehen.

Die Erfindung betrifft weiterhin einen Beutel aus Polyolefin-Folie, dessen Folienwände durch Schweißnähte miteinander verbunden sind, deren Dicke etwa gleich der Gesamtdicke der miteinander verschweißten Folien ist.

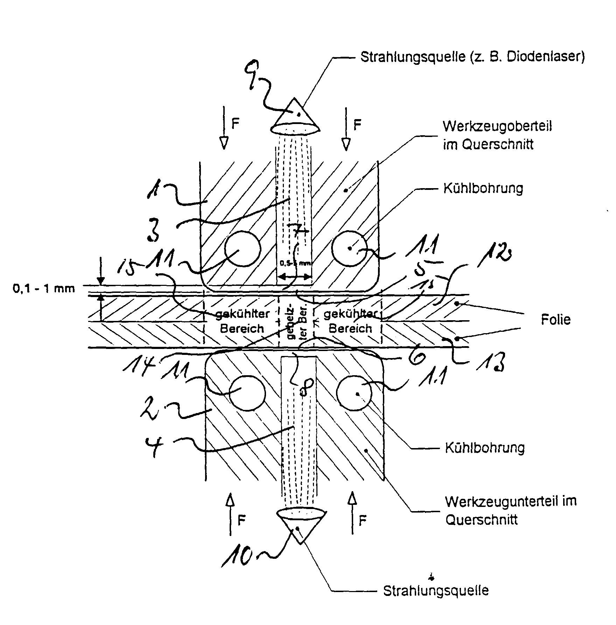

Ein Ausführungsbeispiel der Erfindung wird nachstehend anhand der Zeichnung, in deren einziger Figur ein Längsschnitt durch zwei miteinander zu verschweißende Kunststoffolien einschließende Schweißbacken schematisch dargestellt ist, näher erläutert.

Aus der Zeichnung sind zwei in üblicher Weise relativ zueinander aufeinander zu und voneinander weg bewegbare Schweißbacken 1, 2 ersichtlich, die mit mittleren Längsspalten 3, 4 versehen sind. Diese Längsspalte erstrecken sich bis dicht an die Schweißflächen 5, 6 heran und sind von diesen nur durch dünne Wandbereiche 7, 8 getrennt, die beispielsweise eine Dicke von 0,1 bis 1 mm aufweisen. In den Spalten 3, 4 können Heizeinrichtungen angeordnet sein. Im dargestellten Ausführungsbeispiel sind in den Spalten 3, 4 in einem geeigneten Abstand von den Wänden 7, 8 Reihen von Laserdioden 9, 10 angeordnet, über die über die erforderliche Schweißzeit Wärmeenergie zugeführt wird, die die dünnen Begrenzungswandungen 7, 8 schnell durchdringt, wobei die Wärmezufuhr durch Ausschalten der Laserdioden schnell unterbrochen werden kann.

Beidseits der Spalte 3, 4 befinden sich Kühlmittelbohrungen 11, durch die die seitlichen Schweißbakkenbereiche ständig gekühlt werden.

Zum Verschweißen der beiden Folien 12, 13, bei denen es sich vorzugsweise um Polyolefin-Folien handelt, werden die Schweißbacken in Richtung der Pfeile F auf die Folien 12, 13 gedrückt. Während der Zuführung der Schweißwärme ergibt sich im mittleren Bereich der Schweißbacken 1, 2 ein beheizter Bereich 14 der Folien 12, 13, in dem diese aufgeschmolzen werden und miteinander verschweißen. Dieser beheizte Bereich 14 ist von gekühlten Bereichen 15 eingefaßt, so daß nach dem Ausführen der Schweißnaht aus dem beheizten Bereich 14 die zugeführte Wärme schnell in die gekühlten Bereiche 15 abfließt, so daß sich die gewünschte schnelle Abkühlung der Schweißnaht ergibt.

Während des Schweißvorganges werden die miteinander zu verschweißenden Folien durch Einwirken der Heizeinrichtung bzw. im dargestellten Ausführungsbeispiel der Strahlungsquellen auf eine Temperatur aufgeheizt, die größer ist als 140°C. Nach einer variablen Halte- oder Schweißzeit wird die Wärmezufuhr unterbrochen und die in der Schweißnaht vorhandene Wärme wird schnell in die Kühlzonen abgeleitet. Die gekühlten Bereiche werden dabei ständig auf einer Temperatur von unter 80°C gehalten.

## Patentansprüche

1. Verfahren zum Verschweißen von Kunststoffolien, vorzugsweise von Polyolefin-Folien, bei dem den Folien in ihrem zusammengedrückten, zu verschweißenden Bereich die Schweißwärme zugeführt wird,
   **dadurch gekennzeichnet,**
   daß der Bereich, der sich an den plastifizierten, die Schweißverbindung bildenden Bereich anschließt, während des Zuführens der Schweißwärme gleichzeitig gekühlt wird.

2. Verfahren nach Anspruch 1, dadurch gekennzeichnet, daß die Schweißnaht bzw. der Schweißpunkt und die unmittelbar angrenzenden Bereiche gleichzeitig mit gleichem Druck während des Schweißens bzw. Kühlens beaufschlagt werden.

3. Vorrichtung zur Durchführung des Verfahrens nach Anspruch 1 oder 2 mit zwei relativ aufeinander zu und voneinander weg bewegbaren Schweißbacken (1, 2),
   **dadurch gekennzeichnet,**
   daß der mittlere Bereich (7, 8) mindestens einer Schweißbacke durch eine Heizeinrichtung (9, 10) erwärmbar ist und daß die angrenzenden Bereiche der Schweißbacke (1, 2) durch eine Kühleinrichtung (11) gekühlt sind.

4. Vorrichtung nach Anspruch 3, dadurch gekennzeichnet, daß die Heizeinrichtung aus einer Strahlungsquelle besteht.

5. Vorrichtung nach Anspruch 4, dadurch gekennzeichnet, daß die Strahlungsquelle Laserlicht ist.

6. Vorrichtung nach Anspruch 4 oder 5, dadurch gekennzeichnet, daß die Strahlungsquelle eine Laserdiode ist.

7. Vorrichtung nach Anspruch 4, dadurch gekennzeichnet, daß die Strahlungsquelle Infrarot-Wärmeenergie abstrahlt.

8. Vorrichtung nach Anspruch 3, dadurch gekennzeichnet, daß die Heizeinrichtung aus einer elektrischen Widerstandseinrichtung besteht.

9. Vorrichtung nach einem der Ansprüche 3 bis 8, dadurch gekennzeichnet, daß der beheizte Bereich der Schweißbacken (1, 2) im Bereich der Schweißfläche (5, 6) aus einer dünnen Schicht (7, 8) besteht.

10. Vorrichtung nach einem der Ansprüche 3, 8 und 9, dadurch gekennzeichnet, daß ein aus der dünnen Schicht bestehender Steg das elektrische Widerstandsheizelement bildet.

11. Vorrichtung nach einem der Ansprüche 3 bis 10, dadurch gekennzeichnet, daß mindestens eine Schweißbacke (1, 2) mit Kühlmittelbohrungen (11) versehen ist.

12. Vorrichtung nach einem der Ansprüche 3 bis 11, dadurch gekennzeichnet, daß die Schweißbakken (1, 2) aus keramischen oder metallischen Materialien mit einer Wärmeleitfähigkeit $\lambda$ von < 100 W/m · K und einem Längenausdehnungskoeffizienten $\alpha$ von < 18,5 x 10$^{-6}$ 1/K bestehen.

13. Verschweißter Beutel aus Polyolefin-Folie, gekennzeichnet durch Schweißnähte, deren Dicke gleich der Gesamtdicke der miteinander verschweißten Folien ist.

Strahlungsquelle (z. B. Diodenlaser)

Werkzeugoberteil
im Querschnitt

Kühlbohrung

0,1 - 1 mm

gekühlter
Bereich

gekühlter
Bereich

Folie

Kühlbohrung

Werkzeugunterteil im
Querschnitt

Strahlungsquelle